# EUROPEAN PATENT APPLICATION

(11) **EP 4 635 915 A1**
(43) Date of publication of application: **22.10.2025**
(21) Application number: 25169932.8
(22) Date of filing: 11.04.2025
(51) Int. Cl.: C01F 5/08, C21D 8/12, C22C 38/04

(54) **MAGNESIUM OXIDE FOR ANNEALING SEPARATOR, AND METHOD OF PRODUCING GRAIN-ORIENTED ELECTROMAGNETIC STEEL SHEET USING SAME**

(30) Priority: 19.04.2024 JP 2024068546
(71) Applicant: SETOLAS Holdings, Inc., Takamatsu-shi, Kagawa 760-0026 (JP)
(72) Inventor: TAKEBAYASHI, Kazuyo, Takamatsu-shi Kagawa 790-0026 (JP)
(74) Representative: Vossius & Partner Patentanwälte Rechtsanwälte mbB

(57) **Abstract**

Provided is a magnesium oxide for an annealing separator that allows a slurry of the magnesium oxide for an annealing separator to be evenly applied onto a steel sheet. The magnesium oxide for an annealing separator comprises reticular particles having multiple depressions on the surfaces, and plate-shaped particles. A proportion of the number of plate-shaped particles and the number of reticular particles is 1:99 to 20:80.

## Description

### FIELD

The present invention relates to magnesium oxide for an annealing separator, and to a method of producing a grain-oriented electromagnetic steel sheet using the same.

### BACKGROUND

A process for producing a grain-oriented electromagnetic steel sheet is known, by subjecting steel slag or molten steel to a hot rolling step, a preliminary annealing step, a cold rolling step, a decarburized annealing step and a high temperature annealing step. During a high temperature annealing step, an annealing separator composed mainly of magnesium oxide is coated onto surfaces of a decarburized annealed steel sheet. This forms a forsterite coating film on the surfaces of the steel sheet. The film properties of the forsterite coating film affect the magnetic properties of the steel sheet. Efforts are therefore made to improve the film properties of forsterite coating films. For example, PTL 1 discloses a magnesia-based annealing separator provided for formation of a forsterite film in the final high temperature annealing step for a grain-oriented silicon steel sheet. The annealing separator is composed mainly of magnesia. The magnesia is obtained by mixing magnesium hydroxide with Cu or a Cu compound in a range of 0.1 to 10 wt.% in terms of the metal element with respect to the MgO after calcinating), and calcinating the mixture. According to PTL 1, Cu is introduced into the annealing separator to improve the film properties of the forsterite coating film, and specifically to improve the outer appearance uniformity, the adhesiveness and the occupancy factor.

### [CITATION LIST]

### [PATENT LITERATURE]

[PTL 1] Japanese Unexamined Patent Publication No. H04-56781

### SUMMARY

### [TECHNICAL PROBLEM]

According to PTL 1, adding copper (Cu) to the annealing separator in a range of 0.1 to 10 wt.% improves the film properties of the forsterite coating film. However, because the annealing separator comprises a large amount of copper, it is possible for a large amount of copper to diffuse throughout the steel sheet during the high temperature annealing step. This can result in a high copper content in the steel sheet, potentially having an adverse effect on the magnetic properties of the steel sheet.

In order to obtain a forsterite coating film with satisfactory film properties without being affected by the copper content, it is important for the annealing separator slurry to be uniformly applied onto the steel sheet.

It is an object of the present invention to provide magnesium oxide for an annealing separator that can be evenly coated onto a steel sheet, as a slurry for magnesium oxide for an annealing separator, and a method of producing a grain-oriented electromagnetic steel sheet using the same.

### [SOLUTION TO PROBLEM]

The invention includes the following disclosures.

### (First disclosure)

The first disclosure is magnesium oxide for an annealing separator composed mainly of magnesium oxide. The magnesium oxide for an annealing separator comprises reticular particles each having multiple depressions on a surface, and plate-shaped particles. A proportion between the number of plate-shaped particles and the number of reticular particles is 1:99 to 20:80.

### (Second disclosure)

According to the second disclosure, in the first disclosure, a particle diameter of each of the reticular particles is 0.05 to 5 µm. The size of each of the multiple depressions of the reticular particles is 0.005 to 0.2 µm.

### (Third disclosure)

According to the third disclosure, in the first or second disclosure, a particle diameter of each of the plate-shaped particles is 0.05 to 5 µm.

### (Fourth disclosure)

According to the fourth disclosure, in any one of the first to third disclosures, the magnesium oxide contains copper. A content of the copper is 3 to 200 ppm.

### (Fifth disclosure)

According to the fifth disclosure, in any one of the first to fourth disclosures, in a particle size distribution of the magnesium oxide, D10 is 0.65 to 1.7 µm. D50 is 1.5 to 3.6 µm. D90 is 2.0 to 14 µm. A volume-average diameter is 1.55 to 6.4 µm.

### (Sixth disclosure)

According to the sixth disclosure, in any one of the first to fifth disclosures, the magnesium oxide further includes lumpy particles that are larger than the plate-shaped particles and reticular particles.

### (Seventh disclosure)

According to the seventh disclosure, in any one of the first to sixth disclosures, when a slurry has been formed containing the magnesium oxide for an annealing separator at 5 to 30 mass% using water as a solvent, a viscosity of the slurry at 5°C is 2.2 to 5.2 mPa·s.

### (Eighth disclosure)

The eighth disclosure is a method of producing a grain-oriented electromagnetic steel sheet. The method of producing a grain-oriented electromagnetic steel sheet comprises an applying step and a high temperature annealing step. The applying step is a step of applying a slurry comprising the magnesium oxide for an annealing separator according to any one of the first to seventh disclosures onto a decarburized annealed steel sheet. The high temperature annealing step is a step of annealing the slurry-applied steel sheet.

### [ADVANTAGEOUS EFFECTS OF INVENTION]

According to the present invention it is possible to provide magnesium oxide for an annealing separator that can be evenly coated onto a steel sheet as a slurry for the magnesium oxide for an annealing separator, and a method of producing a grain-oriented electromagnetic steel sheet using the same.

### BRIEF DESCRIPTION OF DRAWINGS

Fig. 1 is a schematic diagram showing an example of reticular particles and plate-shaped particles in magnesium oxide for an annealing separator according to an embodiment.
Fig. 2 is an SEM photograph showing an example of reticular particles and plate-shaped particles of the magnesium oxide of Example 1.
Fig. 3 is an SEM photograph showing an example of lumpy particles of the magnesium oxide of Example 1, to which lumpy particles have been added.
Fig. 4 is an SEM photograph showing an example of particles of magnesium oxide of Comparative Example 1.
Fig. 5 is a graph showing an example of the pore distribution of the magnesium oxide of Example 1.
Fig. 6 is a graph showing an example of the pore distribution of the magnesium oxide of Example 2.
Fig. 7 is a graph showing an example of the pore distribution of the magnesium oxide of Example 3.
Fig. 8 is a graph showing an example of the pore distribution of the magnesium oxide of Comparative Example 1.
Fig. 9 is a graph showing an example of the pore distribution of the magnesium oxide of Comparative Example 3.
Fig. 10 is a graph showing an example of the pore distribution of the magnesium oxide of Comparative Example 4.
Fig. 11 is an optical observation image showing an example of application test results for the magnesium oxide of Example 1.
Fig. 12 is a 3D observation image showing an example of application test results for the magnesium oxide of Example 1.
Fig. 13 is a 3D observation image showing an example of application test results for the magnesium oxide of Example 2.
Fig. 14 is a 3D observation image showing an example of application test results for the magnesium oxide of Example 3.
Fig. 15 is an optical observation image showing an example of application test results for the magnesium oxide of Comparative Example 1.
Fig. 16 is a 3D observation image showing an example of application test results for the magnesium oxide of Comparative Example 1.
Fig. 17 is a 3D observation image showing an example of application test results for the magnesium oxide of Comparative Example 3.
Fig. 18 is a 3D observation image showing an example of application test results for the magnesium oxide of Comparative Example 4.

### DESCRIPTION OF EMBODIMENTS

Preferred embodiments of the magnesium oxide for an annealing separator and the method of producing a grain-oriented electromagnetic steel sheet using the same according to the present invention will now be described below.

### [Magnesium oxide for annealing separator]

The magnesium oxide for an annealing separator of the present invention is powder composed mainly of magnesium oxide. The magnesium oxide for an annealing separator will also be referred to hereafter simply as "magnesium oxide." The magnesium oxide includes reticular particles and plate-shaped particles. Reticular particles are particles each having multiple depressions on the surface, of the magnesium oxide particles constituting the magnesium oxide. Stated differently, the reticular particles are reticulated particles each comprising a skeleton part which forms a net section and hollow parts which form the mesh sections. The skeleton parts may also have flat plate shapes, however. All or a portion of the skeleton parts may also have shapes that are bent or distorted in arbitrary directions. All or a portion of the hollow parts of each of the reticular particles may include through-holes running through the magnesium oxide particle (skeleton part).

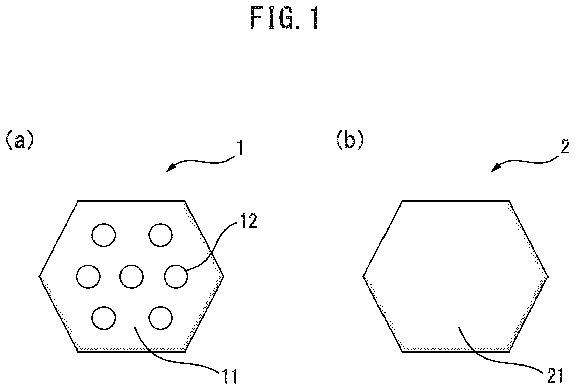

Fig. 1 is a schematic diagram showing an example of reticular particles and plate-shaped particles in magnesium oxide according to the embodiment. Fig. 1(a) shows a reticular particle 1. Fig. 1(b) shows a plate-shaped particle 2.

As shown in Fig. 1(a), the reticular particle 1 is a particle having multiple depressions 12 on the surface 11 of a plate-shaped particle. The planar shape of the reticular particle 1 is not particularly restricted. Examples of planar shapes for the reticular particle 1 include sheet-like, polygonal, rectangular, polygonal-like, elliptical, circular and amorphous shapes, as well as their combinations. The planar shapes of the depressions 12 are not particularly restricted. Examples of planar shapes for the depressions 12 include polygonal, rectangular, polygonal-like, elliptical, circular and amorphous shapes, as well as their combinations. The arrangement of the depressions 12 on the surface 11 of each reticular particle 1 is also not particularly restricted. The arrangement of the depressions 12 may be zigzag, matrixial, random, or a combination thereof. The skeleton parts of the reticular particles may have flat plate shapes as in Fig. 1(a), and while not shown here, they may also be optionally bent or distorted in arbitrary directions.

As shown in Fig. 1(b), the plate-shaped particle 2 is a particle having no visible depressions on the surface 21 of the plate-shaped particle. Stated differently, the plate-shaped particle 2 is a particle with a flat surface 21. However, it may have a few shallow depressions that do not reach the depths of the depressions 12 observed in the reticular particle 1. The planar shape of the plate-shaped particle 2 is not particularly restricted. Examples of planar shapes for the plate-shaped particle 2 include sheet-like, polygonal, rectangular, polygonal-like, elliptical, circular and amorphous shapes, as well as their combinations.

For magnesium oxide, the particles of magnesium oxide as the main component include reticular particles and plate-shaped particles. When magnesium oxide is mixed with a liquid such as water, therefore, the magnesium oxide comes to fit the water and becomes difficult to aggregate in the liquid, mainly due to the presence of the reticular particles. The magnesium oxide mutually separates and readily disperses in the solution, mainly due to the presence of the plate-shaped particles. This can produce a slurry with the magnesium oxide being, for the most part, uniformly dispersed in the liquid. By coating a steel sheet with the slurry, it is possible to form on a steel sheet a coated film in which the magnesium oxide is, for the most part, uniformly dispersed. In other words, the magnesium oxide of the embodiment allows magnesium oxide to easily and sufficiently disperse in liquids, allowing the magnesium oxide to be evenly applied onto the steel sheet.

The particle diameters of the reticular particles are not particularly restricted, so long as they are of sizes on which depressions can be formed. The particle diameters of the reticular particles may be 0.05 to 5 µm, for example. The lower limit for the particle diameters of the reticular particles is preferably 0.1 µm from the viewpoint of helping to prevent aggregation of the particles in the slurry. The upper limit for the particle diameters of the reticular particles is preferably 4 µm from the viewpoint of causing the particles to be uniformly dispersed in the slurry. The particle diameters of the reticular particles can be measured with a scanning electron microscope (SEM) photograph at 20,000x, as described below.

The depression pore diameters of the reticular particles are not particularly restricted, so long as the depressions have depression shapes. The depression pore diameters may be 0.005 to 0.2 µm, for example. The lower limit for the depression pore diameters is preferably 0.01 µm from the viewpoint of facilitating moisture retention by the particles in the slurry. The upper limit of the depression pore diameters is preferably 0.15 µm from the viewpoint of allowing formation of multiple depressions in the particles. The depression pore diameters can be measured with a scanning electron microscope (SEM) photograph at 20,000x, as described below.

The particle diameters of the plate-shaped particles are not particularly restricted, so long as they are of about the same sizes as the reticular particles. The particle diameters of the plate-shaped particles may be 0.05 to 5 µm, for example. The lower limit for the particle diameters of the plate-shaped particles is preferably 0.1 µm from the viewpoint of causing the particles to be stably dispersed in the slurry. The upper limit for the particle diameters of the plate-shaped particles is preferably 4 µm from the viewpoint of causing the particles to be uniformly dispersed in the slurry. The particle diameters of the plate-shaped particles can be measured with a scanning electron microscope (SEM) photograph at 20,000x, as described below.

However it is not necessary for all of the magnesium oxide to be composed of reticular particles and plate-shaped particles. The proportion of the total of the reticular particles and plate-shaped particles with respect to the total magnesium oxide is preferably 70 wt.% or greater. This is from the viewpoint of exhibiting the effect of the magnesium oxide with the reticular particles and plate-shaped particles. The proportion is more preferably 90 wt.% or greater. The proportion is even more preferably 95 wt.% or greater. The proportion can be assessed by a scanning electron microscope (SEM) photograph taken at a magnification of 20,000x or greater, as described below.

The relationship between the number of reticular particles and the number of plate-shaped particles in the magnesium oxide is preferably such that the number of reticular particles is greater than the number of plate-shaped particles. With a greater number of reticular particles, it is easier for the reticular particles in the slurry to retain suitable moisture, and easier for the plate-shaped particles to contribute to dispersibility of the particles, thus providing a synergistic effect to obtain a coated film with even higher uniformity and less clumping. Comparison of the number of particles can be assessed from a scanning electron microscope (SEM) photograph taken at a magnification of 20,000x or greater, as described below.

The relationship between the number of plate-shaped particles and the number of reticular particles in the magnesium oxide may be 1:99 to 20:80 (with 100 as the total), for example, as the proportion of: (number of plate-shaped particles): (number of reticular particles). The proportion of (number of plate-shaped particles):(number of reticular particles) is preferably 5:95 to 15:85. If the proportion of the number of reticular particles and the number of plate-shaped particles in the magnesium oxide is within this range, it will be easier to obtain a slurry viscosity suitable for application when the magnesium oxide is suspended in a liquid such as water. Moreover, if the reticular particles in the magnesium oxide retain suitable moisture and the plate-shaped particles contribute to dispersibility of the particles, then it will be possible to ensure coatability for even higher uniformity and even less clumping.

Alternatively, the relationship between the plate-shaped particles and the reticular particles in the magnesium oxide may be 1:99 to 20:80 (with 100 as the total), for example, as the proportion of (weight of plate-shaped particles):(weight of reticular particles). The proportion of weight of plate-shaped particles):(weight of reticular particles) is preferably 5:95 to 15:85. If the proportion of the weight of reticular particles and the weight of plate-shaped particles in the magnesium oxide is within this range, it will be easier to obtain a slurry viscosity suitable for application when the magnesium oxide is suspended in a liquid such as water. Moreover, if the reticular particles in the magnesium oxide retain suitable moisture and the plate-shaped particles contribute to dispersibility of the particles, then it will be possible to ensure coatability for even higher uniformity and even less clumping.

The magnesium oxide may also contain, in addition to the reticular particles and plate-shaped particles, lumpy particles that are larger than the plate-shaped particles and reticular particles. The shapes of the lumpy particles are not plate-shaped two-dimensional shapes but rather three-dimensional lumpy shapes, where the longest diameter (dimension) of each particle is not more than 4 times the shortest diameter (dimension). Such lumpy particles can function as a spacer to prevent seizing when the decarburized annealed steel sheet is subjected to high temperature annealing in the form of a roll. The lumpy particles have multiple sides. Each of the multiple sides may be flat, or may be distorted with raised and depressed sections. Each of the multiple sides of the lumpy particles may have the same shape, or all or some of them may have mutually different shapes. The lumpy particles may also be formed by binding together several lumpy particles with different shapes. The planar shapes of the lumpy particles are not particularly restricted. Examples of planar shapes for the lumpy particles include polygonal, rectangular, polygonal-like, elliptical, circular and amorphous shapes, as well as their combinations.

The particle diameters of the lumpy particles are not particularly restricted, so long as they are larger than the particle diameters of the plate-shaped particles and reticular particles. The particle diameters for the lumpy particles may be larger than 5 µm and 100 µm or smaller, for example. The lower limit for the particle diameters of the lumpy particles is preferably 10 µm from the viewpoint of allowing them to function as spacers to prevent seizing during high temperature annealing. The upper limit for the particle diameters of the lumpy particles is preferably 50 µm from the viewpoint of causing the particles to be uniformly dispersed in the slurry. The particle diameters of the lumpy particles can be measured from an SEM photograph taken at a magnification of 500x or greater, as described below. The proportion of lumpy particles with respect to the total magnesium oxide may be 1 to 10 wt.%, for example. This is from the viewpoint of allowing them to function as spacers.

The particle size distribution of the magnesium oxide is not particularly restricted, so long as the magnesium oxide has reticular particles and plate-shaped particles, and preferably also lumpy particles. The D10 value is more preferably 0.65 to 1.7 µm. The D50 value is preferably 1.5 to 3.6 µm. The D90 value is preferably 2.0 to 14 µm. The volume-average diameter MV may be 1.55 to 6.4 µm, for example. In the particle size distribution of the magnesium oxide, the particle diameters are distributed in a range that is relatively small but not too small, thus increasing the dispersibility while inhibiting aggregation of the particles in the slurry.

That the annealing separator is composed mainly of magnesium oxide means that the magnesium oxide content of the annealing separator is 50 mass% or greater. From the viewpoint of causing satisfactory function as an annealing separator, the magnesium oxide content is preferably 90 mass% or greater. The magnesium oxide content is more preferably 95 mass% or greater. In the embodiment, the magnesium oxide content of the annealing separator is 98 mass% or greater.

The magnesium oxide may also contain substances other than magnesium oxide. Copper (Cu) is an example of such an additional substance. Including copper can improve the film properties of the forsterite coating film and the magnetic properties of the steel sheet. From the viewpoint of improving the properties, the lower limit for the copper content with respect to the magnesium oxide may be 3 ppm, preferably 30 ppm and more preferably 50 ppm, for example. The upper limit for the copper content with respect to the magnesium oxide may be 200 ppm, for example, from the viewpoint of inhibiting excessive diffusion of copper throughout the steel sheet.

The magnesium oxide may also contain various trace elements that are known to promote film formation and to improve the film properties and/or to improve the magnetic properties of grain-oriented electromagnetic steel sheets. Examples of such trace elements include chlorine (Cl), boron (B), sodium (Na), phosphorus (P), aluminum (Al), titanium (Ti), manganese (Mn) and calcium (Ca), as well as their compounds. Chlorine, for example, is an element that promotes formation of a forsterite film. Boron is another element that promotes formation of a forsterite film. Sodium is an element that regulates the speed of forsterite film formation. Phosphorus is another element that promotes formation of a forsterite film. Aluminum is yet another element that promotes formation of a forsterite film.

When water is used as the solvent to form a slurry containing 5 to 30 mass% magnesium oxide, the slurry viscosity at 5°C is preferably 2.2 to 5.2 mPa·s. The preferred lower limit is 3.5 mPa·s. By avoiding an excessively low viscosity, it is possible to stably maintain a coated film when the slurry containing the magnesium oxide has been applied onto the steel sheet. By avoiding an excessively high viscosity, on the other hand, it is possible to more easily apply the slurry over the entire steel sheet surface. The reason for specifying the slurry viscosity to be 5°C is as follows. When magnesium oxide is dispersed in water to form a slurry, forming a slurry at room temperature results in hydration of the magnesium oxide. When the magnesium oxide hydrate-containing slurry is applied onto the surface of a steel sheet, it can potentially impair the properties of the steel sheet. In order to inhibit hydration of the magnesium oxide, therefore, it is preferred to form the slurry at a low temperature of 5°C and apply it onto the steel sheet surface. It is for this reason that the slurry viscosity for facilitating application is specified as being 5°C.

### [Method of producing magnesium oxide for annealing separator]

The method of producing magnesium oxide is not particularly restricted, so long as it allows production of magnesium oxide having the structure described above. One example is a production method whereby a magnesium starting material is reacted with an alkali starting material to synthesize magnesium hydroxide, and the magnesium hydroxide is calcinated to obtain magnesium oxide. Examples of magnesium starting materials include water-soluble magnesium salts and their hydrates. Suitable magnesium starting materials include magnesium chloride hexahydrate, magnesium chloride dihydrate and magnesium chloride anhydrate. The magnesium starting material may also be seawater, brine or bittern, for example. When the magnesium hydroxide is calcinated, the calcinating atmosphere may be air or nitrogen, for example. Examples of alkali starting materials include calcium hydroxide, sodium hydroxide and potassium hydroxide.

Another example of a production method is a method of using magnesium oxide obtained by calcinating mineral magnesite. In this method, the magnesium oxide obtained from the mineral magnesite is hydrated to obtain magnesium hydroxide, and the magnesium hydroxide is calcinated to obtain magnesium oxide.

The technical terms used herein relating to calcinating of magnesium hydroxide samples are as follows. The term "temperature increase time" refers to the time for heating from room temperature until reaching the target maximum temperature during calcinating of the sample. The term "holding temperature" refers to the target maximum temperature during calcinating of the sample. This may also be referred to as the "calcinating temperature." The term "holding time" refers to the time for which the holding temperature is maintained during calcinating of the sample. The term "temperature decrease time" refers to the time for cooling from the holding temperature after the holding time has elapsed until reaching room temperature, during calcinating of the sample. Cooling includes active cooling using cooling means, as well as gentle cooling by standing.

### <Calcinating conditions>

The shapes of the particles in the magnesium oxide, such as reticular particles, plate-shaped particles and lumpy particles, can be controlled by adjusting the final calcinating conditions for obtaining the magnesium oxide, and the trace elements in the precursor provided for the final calcinating. The calcinating conditions include the temperature increase time, holding temperature, holding time and temperature decrease time.

### <Plate-shaped particles>

The conditions for obtaining magnesium oxide containing plate-shaped particles are a temperature increase time of preferably 0.5 hours to 2.5 hours and more preferably 1.0 hours to 2.0 hours. The holding temperature is preferably 400°C to 700°C or 1000°C to 1300°C, and more preferably 450°C to 600°C or 1050°C to 1200°C. If the holding temperature is 400°C to 700°C it will be easier to maintain the shapes of the magnesium hydroxide, and to obtain plate-shaped particles. If the holding temperature is 1000°C to 1300°C on the other hand, sintering of the magnesium oxide will proceed satisfactorily, making it easy to obtain plate-shaped particles. The holding time is preferably 0.1 hour to 15.0 hours and more preferably 0.2 hours to 13.0 hours. The temperature decrease time is preferably 0.1 hours to 6.0 hours and more preferably 0.2 hours to 5.0 hours. The temperature increase time, holding time and temperature decrease time are the same for the two temperature ranges for the holding temperature.

If the holding temperature is lower than the aforementioned range, magnesium hydroxide will tend to remain as residue. If the holding temperature is outside of the range, such as 700°C to 1000°C, reticular particles will tend to form more easily, making it difficult to obtain plate-shaped particles. If the holding temperature is higher than this range, sintering will proceed too far, tending to result in formation of aggregated masses and making it difficult to obtain plate-shaped particles.

### <Reticular particles>

The conditions for obtaining magnesium oxide containing reticular particles are a temperature increase time of preferably 0.5 hours to 2.0 hours and more preferably 1.0 hours to 1.5 hours. The holding temperature is preferably 700°C to 1000°C and more preferably 750°C to 950°C. The holding time is preferably 0.1 hours to 24 hours and more preferably 0.2 hours to 1.0 hours. The temperature decrease time is preferably 0.1 hours to 1.0 hours and more preferably 0.2 hours to 0.8 hours.

If the temperature increase time, holding time and temperature decrease time are shorter than these ranges it will be difficult to obtain reticular particles, and calcinating will tend to be uneven. If the holding temperature is lower than these ranges, it will be difficult to obtain reticular particles. If the temperature increase time, holding time and temperature decrease time are longer than these ranges, on the other hand, plate-shaped particles will form more readily, making it difficult to obtain reticular particles. If the holding temperature is higher than these ranges, it will be difficult to obtain reticular particles, and production efficiency will also be impaired.

### <Lumpy particles>

The temperature increase time is preferably 0.5 hours to 2.5 hours and more preferably 1.0 hours to 2.0 hours. The holding temperature is preferably 1100°C to 1300°C and more preferably 1200°C to 1300°C. The holding time is preferably 0.1 hours to 15.0 hours and more preferably 0.2 hours to 13.0 hours. The temperature decrease time is preferably 0.1 hours to 6.0 hours and more preferably 0.2 hours to 5.0 hours.

If the temperature increase time, holding time and temperature decrease time are shorter than these ranges, plate-shaped particles will form more readily, making it difficult to obtain lumpy particles. If the holding temperature is lower than these ranges, the particle diameters will fail to reach sufficient size. If the temperature increase time, holding time and temperature decrease time are longer than these ranges, on the other hand, the particle diameters will become too large. If the holding temperature is higher than these ranges, the particle diameters will likewise become too large.

### <Effect of trace elements during calcinating>

When forming reticular particles and plate-shaped particles, the melting point of the substance to be calcinated is altered by trace elements present in the substance to be calcinated. A scanning electron microscope (SEM) is therefore used to confirm whether the desired reticular particles and/or plate-shaped particles have been formed.

For example, the chlorine (Cl) content has an effect of lowering the melting point of the substance to be calcinated, within a holding temperature range of about 700 to 900°C during calcinating, thereby affecting primarily formation of reticular particles. The Cl content of the magnesium oxide obtained after calcinating is preferably 0.001 to 0.1 mass%.

The boron (B) content also has an effect of lowering the melting point of the substance to be calcinated, within a holding temperature range of about 1200 to 1300°C during calcinating, thereby affecting primarily formation of plate-shaped particles and lumpy particles. The B content of the magnesium oxide obtained after calcinating is preferably 0.03 to 0.15 mass%. Using magnesium oxide having a boron content within this range as the annealing separator can provide satisfactory magnetic properties and insulating properties for a grain-oriented electromagnetic steel sheet.

### <Calcinating atmosphere>

The atmosphere during calcinating may be nitrogen or air. It is sufficient if heat uniformly contacts the substance to be calcinated. The substance to be calcinated may also be uniformly stirred during calcinating. The apparatus used for calcinating may be a rotary kiln, for example.

### <Controlling proportion of plate-shaped particles and reticular particles>

The proportion of the plate-shaped particles and reticular particles can be controlled by adjustment in which magnesium oxides obtained after final calcinating are mixed with different proportions of plate-shaped particles and reticular particles. The final firing conditions for obtaining the magnesium oxide can be controlled by adjusting the settings for the temperature increase time, holding temperature, holding time and temperature decrease time, for example, or the trace elements in the precursors (intermediate products) provided for the final calcinating.

### <Controlling proportion of plate-shaped particles, reticular particles and lumpy particles>

The proportion of the plate-shaped particles, reticular particles and lumpy particles can be controlled by adjustment in which magnesium oxides obtained after final firing are mixed with different proportions of plate-shaped particles, reticular particles and lumpy particles. The final calcinating conditions for obtaining the magnesium oxide can be controlled by adjusting the settings for the temperature increase time, holding temperature, holding time and temperature decrease time, for example, or the trace elements in the precursors (intermediate products) provided for the final calcinating.

### <Controlling contents of trace elements in magnesium oxide>

The contents of the trace elements in the magnesium oxide are controlled in the following manner. First, the contents of the trace elements in the starting materials used for production of the magnesium oxide are measured. Based on the results, the trace elements are added to or removed from the starting materials or intermediate products so that the contents of the trace elements in the magnesium oxide are the desired contents. The starting materials may be, for example, magnesium starting materials, mineral magnesite and alkali compounds to be reacted with the magnesium starting materials. Magnesium hydroxide is an example of an intermediate product.

The method of adding the trace elements is not particularly restricted. The method may involve mixing a compound containing the trace element to be controlled, with the starting materials or intermediate product, for example. The mixing method may be a wet method or a dry method. The intermediate product includes the aforementioned precursors.

The method of removing the trace elements is not particularly restricted. The method may involve washing the starting materials or intermediate product, for example. Water washing is a specific example of washing.

After intermediate products with different compositions have been mixed to adjust the excess or deficient trace elements, final calcinating may be carried out to obtain magnesium oxide having the trace element contents adjusted to the desired contents. Alternatively, magnesium oxides after final calcinating, having different compositions, may be mixed, adjusting excess or deficient trace elements to obtain magnesium oxide having the trace element contents adjusted to the desired contents.

For example, a method of adding copper (Cu) to magnesium oxide may involve mixing copper or a copper compound with the intermediate product to adjust excess or deficient copper, prior to the final calcinating. Alternatively, the method may involve, for example, mixing multiple magnesium oxides after final calcinating to adjust excess or deficient copper. This will allow magnesium oxide with the desired copper content to be obtained. A preferred method is one in which a predetermined amount of copper or a copper compound is mixed with a slurry of magnesium hydroxide as the intermediate product before the final calcinating. This will help facilitate uniform dispersion of copper in the obtained magnesium oxide. Copper oxide (CuO) is an example of a preferred copper compound.

A method of adding boron (B) to magnesium oxide may involve, for example, mixing a boron compound with the intermediate product to adjust excess or deficient boron, prior to the final calcinating. Alternatively, the method may involve mixing multiple magnesium oxides after final calcinating to adjust excess or deficient boron. This will allow magnesium oxide with the desired boron content to be obtained. Examples of boron compounds include boric acid, alkali metal borate salts, ammonium borate salts and alkali metal metaborate salts, and boron dioxide.

In a production step for magnesium oxide, it may be effective to add various additives other than copper (Cu), which are known to improve film properties and magnetic properties. Examples of such additives include titanium (Ti), manganese (Mn), aluminum (Al) and calcium (Ca), as well as their compounds.

### <Controlling magnesium oxide particle size distribution (D10, D50, D90, MV)>

The particle size distribution of the magnesium oxide can be controlled by the following methods.

As one method, the magnesium starting material and alkali starting material are reacted to synthesize magnesium hydroxide, during which time at least one from among the reaction temperature, reaction rate and stirring conditions is adjusted. As another method, the precursors prior to final calcinating are pulverized. As yet another method, the calcinating conditions for the magnesium hydroxide are controlled. As a further method, the magnesium oxide after the final calcinating is subjected to calcinating again, or pulverized.

These conditions are used to produce the magnesium oxide for an annealing separator. Since the magnesium oxide has the structure specified above, the magnesium oxide for an annealing separator can be evenly applied onto a steel sheet.

### [Method of producing grain-oriented electromagnetic steel sheet using magnesium oxide for annealing separator]

A method of producing a grain-oriented electromagnetic steel sheet using the magnesium oxide for an annealing separator described above will now be explained. The method comprises an applying step in which a slurry containing the magnesium oxide is applied onto a decarburized annealed steel sheet, and a high temperature annealing step in which the magnesium oxide-coated steel sheet is annealed.

### <Applying step>

The magnesium oxide is uniformly dispersed in a liquid to form a slurry containing magnesium oxide. The liquid may be water, for example. The slurry is formed at a low temperature of 5°C so that the magnesium oxide is not hydrated.

As mentioned above, the concentration of the magnesium oxide may be 5 to 30 mass%, for example. The lower limit for the concentration of the magnesium oxide is preferably 7 mass% from the viewpoint of facilitating application of the slurry without producing uneven sections. The upper limit for the concentration of the annealing separator is preferably 25 mass% from the viewpoint of producing a viscosity that facilitates application of the slurry.

As mentioned above, the slurry viscosity at 5°C may be 2.2 to 5.2 mPa·s, for example. The lower limit for the slurry viscosity at 5°C is preferably 2.6 mPa·s from the viewpoint of ensuring a sufficient coating amount. The lower limit is even more preferably 3.5 mPa·s. The upper limit for the slurry viscosity at 5°C is preferably 4.6 mPa·s from the viewpoint of facilitating application of the slurry.

The slurry is continuously applied onto the decarburized annealed steel sheet using a roll coating apparatus or spray apparatus. However, the slurry is applied at a low temperature of 5°C so that the magnesium oxide is not hydrated. Since magnesium oxide having the structure specified above is used, the slurry containing the magnesium oxide can be evenly applied onto a steel sheet. The coated slurry is then dried at a temperature of about 300 to 500°C, for example.

### <High temperature annealing step>

The steel sheet onto which the slurry has been applied, and is thus coated with magnesium oxide, is then annealed. The annealing conditions may be 10 to 20 hours at 1000 to 1200°C, for example. This forms a forsterite coating film on the steel sheet surface, after which specific publicly known treatment is carried out as necessary to form a grain-oriented electromagnetic steel sheet that employs the annealing separator.

In the method of producing a grain-oriented electromagnetic steel sheet according to the invention, magnesium oxide having the structure specified above that can be evenly applied onto a steel sheet is used. A forsterite coating film having satisfactory film properties can thus be formed on the steel sheet. This allows a grain-oriented electromagnetic steel sheet with improved magnetic properties to be obtained.

The magnesium oxide for an annealing separator of the invention and the method of producing a grain-oriented electromagnetic steel sheet using it are not restricted to the embodiments described above or the Examples described below, and may incorporate appropriate combinations, substitutions and modifications within a range that is not outside of the object and gist of the invention.

### <Measuring and testing methods>

The measuring methods and testing methods used were as follows.
1. Particle diameters of reticular particles, plate-shaped particles and lumpy particles, recess pore diameters of reticular particles, proportion of totals of reticular particles and plate-shaped particles, and proportion of reticular particles and plate-shaped particles

The particle diameters of the reticular particles and plate-shaped particles, and the recess pore diameters of the reticular particles, were confirmed from images obtained using a scanning electron microscope (SEM) taken at 20,000x magnification. The particle diameters of the lumpy particles were confirmed from images obtained using a scanning electron microscope (SEM) taken at magnification of 500x. For measurement of the particle diameters and pore diameters on the images, each particle diameter or pore diameter was determined as the diameter of the minimum circle surrounding the particle or depression to be measured. The particle diameter or pore diameter range was from the minimum to maximum of 10 arbitrary selected particles or depressions, for example. The average value for the particle diameters or pore diameters was determined as the average particle diameter or pore diameter for 10 arbitrarily selected particles or depressions, recorded as the final average particle diameter or pore diameter.

The proportion of the total weight of reticular particles and plate-shaped particles with respect to the total weight of the magnesium oxide was confirmed from images obtained using a scanning electron microscope (SEM) taken at a 20,000x magnification. Specifically, the proportion of the total area of reticular particles and plate-shaped particles in the image with respect to the area of the image was calculated to approximate the total weight of the reticular particles and plate-shaped particles with respect to the total weight of magnesium oxide. The proportion of the weight of the reticular particles and plate-shaped particles was confirmed from images obtained using a scanning electron microscope (SEM) taken at magnification of 20,000x. Specifically, the total area of reticular particles and the total area of plate-shaped particles in the image was calculated to approximate the proportion of the weight of reticular particles and plate-shaped particles.

### 2. Particle size distribution

The particle size distribution was measured using an MT3300EXII particle size distribution analyzer (product of MicrotracBel). First, the particle size distribution analyzer was filled with ion-exchanged water and the ion-exchanged water was circulated. A suitable amount of sample was then added, and after confirming an amount in the proper range, it was circulated for 1 minute prior to measurement. The measuring time was 30 seconds.

### 3. Relationship between number of plate-shaped particles and number of reticular particles

The relationship between the number of plate-shaped particles and the number of reticular particles was determined by visual observation of an image obtained using a scanning electron microscope (SEM), at a magnification of 20,000x or higher. After arbitrarily selecting 100 particles in the image, the number of plate-shaped particles and the number of reticular particles were counted, and the proportion of the number of plate-shaped particles and number of reticular particles was calculated.

### 4. BET specific surface area, pore distribution and total pore volume

Approximately 0.5 g of sample was measured out into a cell and subjected to vacuum deaeration as pretreatment, and then heated at 105°C for 1 hour. The pretreated cell was measured for specific surface area, pore distribution and total pore volume based on nitrogen adsorption, using a BELSORP MAX pore distribution measuring device (product of MicrotracBel). The specific surface area was analyzed by the multipoint BET method. The pore distribution was analyzed by the BJH method using a desorption isotherm. The total pore volume was determined by calculation of the total pore volume by the one point method.

### 5. Trace element content

After dissolving 0.5 g of sample in 5 ml of a 30% HNO₃ solution, the solution was brought to a constant volume of 100 ml with ultrapure water and used as the test solution for measurement by the calibration curve method using an SPS3520-DD emission spectroscopic analyzer (product of Hitachi High-Tech Science).

### 6. Slurry viscosity

After adding 30 ml of ion-exchanged water into a beaker equipped with a stirrer, the temperature was controlled to 5°C. The procedure thereafter was conducted under temperature control at 5°C. A 3.5 g portion of the sample was then weighed out with an electronic plate balance and loaded into the beaker. After loading, the mixture was allowed to stand for 30 seconds and then stirred and mixed for 2 minutes using the stirrer, to obtain a test solution. A 7 ml portion of the test solution was placed inside the chamber of a temperature controlled LVDV2T viscometer (product of Brookfield Co.) and measured. The spindle used was an SC4-18(18), and the rotational speed was 200 rpm.

### 7. Slurry application test

A 3.5 g portion of magnesium oxide was suspended in 30 ml of 5°C water to obtain a slurry. The obtained slurry was applied onto a steel sheet having a length of 150 mm, a width of 80 mm and a thickness of 0.5 mm, and after homogenization by passing through a rubber roll, it was calcinated for 20 seconds at 500°C for baking of the MgO. The obtained steel sheet was photographed as an optical observation image and a 3D observation image, using a VR-6000 One-Shot 3D profile meter (product of Keyence Corp.).

### EXAMPLES

The present invention will now be explained in greater detail using Examples and Comparative Examples. However, it is to be understood that the invention is not limited only to these Examples and Comparative Examples.

### (1) Samples

### [Example 1]

After mixing a 1.7 mol/L magnesium chloride aqueous solution and a 2.2 mol/L calcium hydroxide aqueous solution, reaction was conducted for 4 hours at 130°C to obtain a magnesium hydroxide slurry. Copper oxide (CuO) was added to the obtained slurry to 0.012 mass% for the copper (Cu) in the final magnesium oxide. A boric acid aqueous solution adjusted to 0.3 × 10³ mol·m⁻³ with purified water was then added to the obtained slurry to 0.09 mass% for the boron (B) in the final magnesium oxide. After addition, the slurry was filtered and washed with purified water in an amount of 20 times the solid content, to obtain a magnesium hydroxide cake. The obtained cake was dried for 40 minutes at 180°C to obtain magnesium hydroxide.

The obtained magnesium hydroxide was calcinated in an air atmosphere using a rotary kiln under conditions with a temperature increase time of 1.25 hours, a holding temperature of 900°C, a holding time of 0.25 hours and a temperature decrease time of 0.25 hours, to obtain a calcinated product. The obtained calcinated product was pulverized with a jet mill to obtain magnesium oxide A. When the obtained magnesium oxide A was analyzed by observing 100 arbitrary particles in an SEM photograph at 20,000x magnification, reticular particles were confirmed but no plate-shaped particles were found.

Separately prepared magnesium oxide with a D50 of 3.1 µm was rehydrated for 4 hours at 90°C, and then dehydrated and dried to obtain magnesium hydroxide powder. The obtained magnesium hydroxide powder was calcinated in an air atmosphere using a tunnel kiln under conditions with a temperature increase time of 2 hours, a holding temperature of 1100°C, a holding time of 12 hours and a temperature decrease time of 4 hours, to obtain a calcinated product. The obtained calcinated product was pulverized with a jet mill to obtain magnesium oxide B. When the obtained magnesium oxide B was analyzed by observing 100 arbitrary particles in an SEM photograph at 20,000x magnification, no reticular particles were confirmed but plate-shaped particles were found. When the obtained magnesium oxide B was analyzed by observing an SEM photograph at 500x magnification, lumpy particles were found.

The magnesium oxide B and magnesium oxide A were mixed in a weight ratio of 10:90 to obtain magnesium oxide for Example 1. In the magnesium oxide of Example 1, the ratio of the number of plate-shaped particles to number of reticular particles was 10:90. The ratio of the number of plate-shaped particles to number of reticular particles was therefore in the range of 1:99 to 20:80.

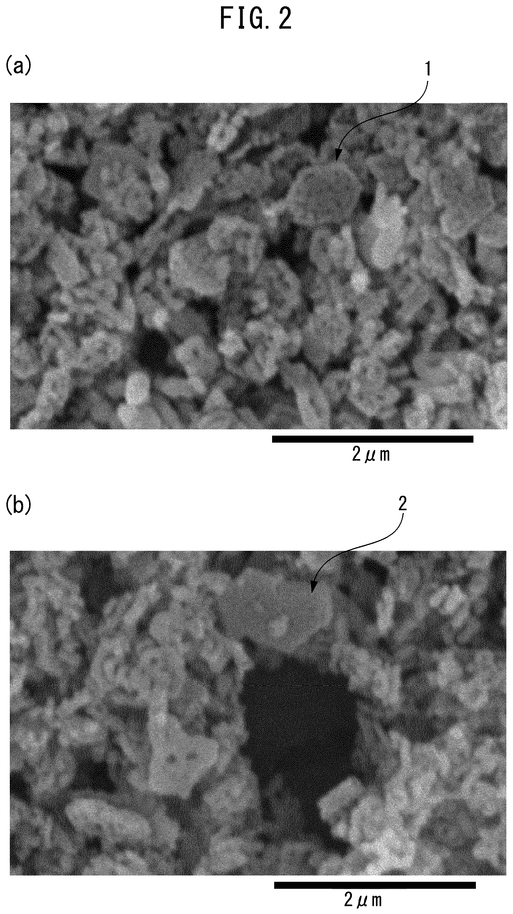

Fig. 2 is an SEM photograph showing an example of reticular particles and plate-shaped particles of the magnesium oxide of Example 1. The magnification factor was 20,000x. Fig. 2(a) shows a typical example of a reticular particle 1. Fig. 2(b) shows a typical example of a plate-shaped particle 2. As seen in Fig. 2(a), the reticular particle 1 was a particle having multiple depressions on the surface of a plate-shaped particle. The planar shape was approximately hexagonal. Several reticular particles were also visible around its periphery. As shown in Fig. 2(b), the plate-shaped particle 2 can be seen to have numerous irregularities on the surface, but without any noticeable depressions. The planar shape was deformed hexagonal. A few reticular particles were also visible around its periphery.

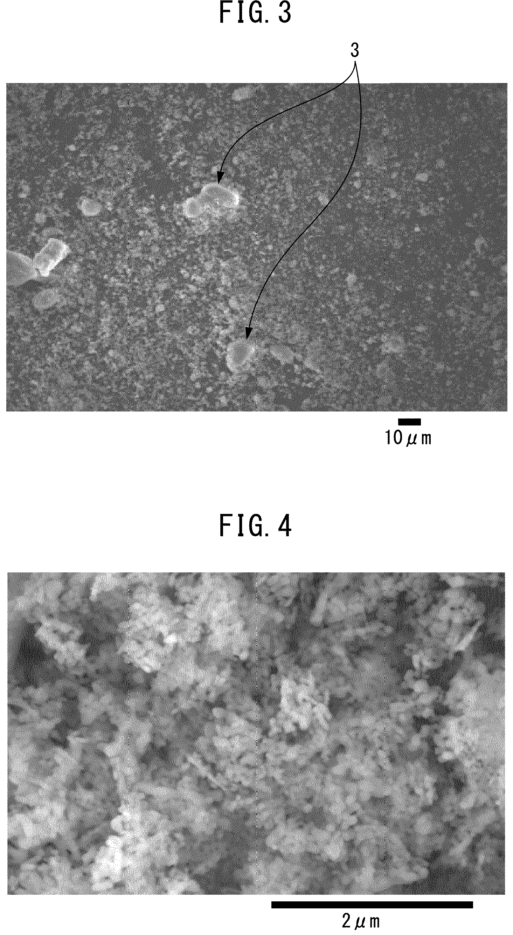

Fig. 3 is an SEM photograph showing an example of lumpy particles of the magnesium oxide of Example 1, to which lumpy particles have been added. The magnification factor was 500x. As shown here, the lumpy particles 3 have multiple sides. The surfaces of the lumpy particles 3 had small particles adhering to the reticular particles and plate-shaped particles.

### [Example 2]

After mixing 1.6 mol/L bittern and a 12 mol/L aqueous sodium hydroxide solution, reaction was conducted for 2 hours at 130°C to obtain a magnesium hydroxide slurry. The obtained slurry was filtered and washed with soft water in an amount of 20 times the solid content, to obtain a magnesium hydroxide cake. The obtained cake was dried for 40 minutes at 180°C to obtain magnesium hydroxide.

The obtained magnesium hydroxide was calcinated in an air atmosphere using a rotary kiln under conditions with a temperature increase time of 0.5 hours, a holding temperature of 550°C, a holding time of 1.0 hours and a temperature decrease time of 0.1 hours, to obtain a calcinated product. The obtained calcinated product was pulverized with an impact crusher to obtain magnesium oxide C. When the obtained magnesium oxide C was analyzed by observing 100 arbitrary particles in an SEM photograph at 20,000x magnification, no reticular particles were found but plate-shaped particles were confirmed. When the obtained magnesium oxide C was analyzed by observing an SEM photograph at 500x magnification, no lumpy particles were found.

After mixing 1.6 mol/L bittern and a 12 mol/L aqueous sodium hydroxide solution, reaction was conducted for 2 hours at 130°C to obtain a magnesium hydroxide slurry. The obtained slurry was filtered and washed with soft water in an amount of 20 times the solid content, to obtain a magnesium hydroxide cake. The obtained cake was dried for 40 minutes at 150°C and the obtained dried product was pulverized using an impact crusher to obtain magnesium hydroxide.

The obtained magnesium hydroxide was calcinated in an air atmosphere using a tunnel kiln under conditions with a temperature increase time of 0.5 hours, a holding temperature of 850°C, a holding time of 24 hours and a temperature decrease time of 0.1 hours, to obtain magnesium oxide D. When the obtained magnesium oxide D was analyzed by observing 100 arbitrary particles in an SEM photograph at 20,000x magnification, reticular particles were confirmed but no plate-shaped particles were found.

The magnesium oxide C and magnesium oxide D were mixed in a weight ratio of 5:95 to obtain magnesium oxide for Example 2. In the magnesium oxide of Example 2, ratio of the number of plate-shaped particles to number of reticular particles ratio was 5:95. The ratio of the number of plate-shaped particles to number of reticular particles was therefore in the range of 1:99 to 20:80.

### [Example 3]

The magnesium oxide C and magnesium oxide D were mixed in a weight ratio of 15:85 to obtain magnesium oxide for Example 3. In the magnesium oxide of Example 3, the ratio of the number of plate-shaped particles to number of reticular particles ratio was 15:85. The ratio of the number of plate-shaped particles to number of reticular particles was therefore in the range of 1:99 to 20:80.

### [Comparative Example 1]

First, magnesium oxide was prepared having a MgO content of 92.9 wt.%, a SiO₂ content of 2.39 wt.%, a CaO content of 2.36 wt.%, an Al₂O₃ content of 0.19 wt.% and an Fe₂O₃ content of 0.55 wt.%, in terms of oxides. The magnesium oxide was loaded into an ammonium nitrate aqueous solution with NH₄NO₃/MgO in a molar ratio of 2, in a reactor equipped with a stirrer, cooler, thermometer and gas suction port, while heating at 100°C. The aqueous solution was stirred to dissolve and react the magnesium oxide, forming a magnesium nitrate solution and discharging ammonia gas. The generated ammonia gas was placed in water, recovering it with the water, and was then concentrated to 10.0 mol/L as an alkali source. The generated magnesium nitrate solution was filtered and recovered, and adjusted to 3.5 mol/L as a magnesium source.

The purified magnesium nitrate solution, ammonia water and water were mixed at 25°C in a proportion of 1.46 mol Mg(NO₃)₂ (417.14 ml):2.92 mol NH₃·H₂O (292.0 ml):16.14 mol H₂O (290.86 ml). This caused reaction between magnesium nitrate and ammonia to obtain a magnesium hydroxide slurry.

The obtained magnesium hydroxide slurry was heated for 4 hours at 130°C to obtain a magnesium hydroxide slurry. After adding a boric acid aqueous solution in a suitable amount to the obtained magnesium hydroxide slurry, the mixture was filtered and washed with purified water in an amount of 20 times the solid content, to obtain a magnesium hydroxide cake.

The obtained cake was dried for 40 minutes at 180°C to obtain magnesium hydroxide. The obtained magnesium hydroxide was calcinated in an air atmosphere using a rotary kiln under conditions with a temperature increase time of 1.5 hours, a holding temperature of 900°C, a holding time of 0.5 hours and a temperature decrease time of 0.5 hours, to obtain a calcinated product. The obtained calcinated product was pulverized with a jet mill to obtain magnesium oxide for Comparative Example 1. As a result of observing 100 arbitrary particles of the magnesium oxide of Comparative Example 1 in an SEM photograph at 20,000x magnification, the number of plate-shaped particles:number of reticular particles ratio was 0:100. The ratio of the number of plate-shaped particles to number of reticular particles was therefore outside of the range of 1:99 to 20:80.

Fig. 4 is an SEM photograph showing an example of particles of the magnesium oxide of Comparative Example 1. The magnification factor was 20,000x. As shown in the photograph, the reticular particles (or aggregates) are present with relatively small sizes compared to Fig. 2(a), and with skeleton parts bent or distorted in arbitrary directions, while virtually no plate-shaped-like particles are seen. Also, no lumpy particles were observed in an SEM photograph with a magnification of 500x (not shown).

### [Comparative Example 2]

After mixing a 1.7 mol/L magnesium chloride aqueous solution and a 12 mol/L aqueous sodium hydroxide solution, reaction was conducted for 4 hours at 130°C to obtain a magnesium hydroxide slurry. The obtained slurry was filtered and washed with purified water in an amount of 20 times the solid content, to obtain a magnesium hydroxide cake. The obtained cake was dried for 40 minutes at 180°C to obtain magnesium hydroxide.

The obtained magnesium hydroxide was calcinated in an air atmosphere using a rotary kiln under conditions with a temperature increase time of 1.5 hours, a holding temperature of 950°C, a holding time of 0.5 hours and a temperature decrease time of 0.5 hours, to obtain a calcinated product. The obtained calcinated product was pulverized with a jet mill to obtain magnesium oxide for Comparative Example 2. As a result of observing 100 arbitrary particles of the obtained magnesium oxide of Comparative Example 2 in an SEM photograph at 20,000x magnification, the ratio of the number of plate-shaped particles to number of reticular particles was 0:100. The ratio of the number of plate-shaped particles to number of reticular particles was therefore outside of the range 1:99 to 20:80.

### [Comparative Example 3]

Magnesium oxide composed entirely of magnesium oxide C was used as Comparative Example 3. In the magnesium oxide of Comparative Example 3, the ratio of the number of plate-shaped particles to number of reticular particles ratio was 100:0. The ratio of the number of plate-shaped particles to number of reticular particles was therefore outside of the range of 1:99 to 20:80.

### [Comparative Example 4]

The magnesium oxide C and magnesium oxide D were mixed in a weight ratio of 30:70 to obtain magnesium oxide for Comparative Example 4. In the magnesium oxide of Comparative Example 4, the ratio of the number of plate-shaped particles to number of reticular particles ratio was 30:70. The ratio of the number of plate-shaped particles to number of reticular particles was therefore outside of the range of 1:99 to 20:80.

### (2) Evaluated properties

The magnesium oxide of Example 1, and the magnesium oxides of Comparative Example 1 and Comparative Example 2 were evaluated in regard to particle diameter, recess pore diameter, particle size distribution, slurry viscosity, trace element content, pore distribution, pore volume and BET specific surface area, and by a slurry application test.

Example 2, Example 3, Comparative Example 3 and Comparative Example 4 were evaluated in regard to particle diameter, recess pore diameter, particle size distribution, trace element content, pore distribution, pore volume and BET specific surface area, and by a slurry application test.

### (3) Evaluation results

### (a) Particle diameter and recess pore diameter

The magnesium oxides of Example 1, Example 2 and Example 3 had reticular particle diameters largely in the range of 0.05 to 5 µm. The magnesium oxides of Example 1, Example 2 and Example 3 had reticular particle recess pore diameters largely in the range of 0.005 to 0.2 µm. The magnesium oxides of Example 1, Example 2 and Example 3 had plate-shaped particle diameters largely in the range of 0.05 to 5 µm, with reticular particles of about the same size. The magnesium oxide of Example 1 had lumpy particle diameters largely in the range of 5 to 100 µm.

With the magnesium oxides of Comparative Example 1 and Comparative Example 2, on the other hand, reticular particles formed but without formation of plate-shaped particles.

### (b) Particle size distribution

In the magnesium oxide of Example 1, the values were D10 = 1.24 µm, D50 = 2.55 µm and D90 = 9.97 µm, and the volume-average diameter MV was 4.57 µm.

In the magnesium oxide of Example 2, the values were D10 = 0.77 µm, D50 = 1.53 µm and D90 = 2.54 µm, and the volume-average diameter MV was 1.62 µm.

In the magnesium oxide of Example 3, the values were D10 = 0.72 µm, D50 = 1.54 µm and D90 = 2.58 µm, and the volume-average diameter MV was 1.62 µm.

In other words, with the magnesium oxides of Example 1, Example 2 and Example 3, D10 was in the range of 0.65 to 1.7 µm, D50 was in the range of 1.5 to 3.6 µm, D90 was in the range of 2.0 to 14 µm and MV was in the range of 1.55 to 6.4 µm. In other words, the particle size distributions of the magnesium oxides of Example 1, Example 2 and Example 3 were toward relatively small particle diameters.

In the magnesium oxide of Comparative Example 1, on the other hand, the values were D10 = 1.29 µm, D50 = 6.15 µm and D90 = 40.01 µm, and the volume-average diameter MV was 17.17 µm. In other words, with the magnesium oxide of Comparative Example 1, D10 was in the range of 0.65 to 1.7 µm, but D50 was outside of the range of 1.5 to 3.6 µm, D90 was outside of the range of 2.0 to 14 µm and MV was outside of the range of 1.55 to 6.4 µm.

In the magnesium oxide of Comparative Example 2, the values were D10 = 1.02 µm, D50 = 3.86 µm and D90 = 70.52 µm, and the volume-average diameter MV was 25.53 µm. In other words, with the magnesium oxide of Comparative Example 2, D10 was in the range of 0.65 to 1.7 µm, but D50 was outside of the range of 1.5 to 3.6 µm, D90 was outside of the range of 2.0 to 14 µm and MV was outside of the range of 1.55 to 6.4 µm.

In the magnesium oxide of Comparative Example 3, the values were D10 = 1.14 µm, D50 = 4.00 µm and D90 = 6.75 µm, and the volume-average diameter MV was 4.12 µm. In other words, with the magnesium oxide of Comparative Example 3, D10 was in the range of 0.65 to 1.7 µm, D50 was outside of the range of 1.5 to 3.6 µm, D90 was in the range of 2.0 to 14 µm and MV was in the range of 1.55 to 6.4 µm.

In other words, the particle size distributions of the magnesium oxides of Comparative Example 1, Comparative Example 2 and Comparative Example 3 were toward relatively large particle diameters.

In the magnesium oxide of Comparative Example 4, the values were D10 = 0.52 µm, D50 = 1.43 µm and D90 = 2.57 µm, and the volume-average diameter MV was 1.50 µm. In other words, with the magnesium oxide of Comparative Example 4, D10 was outside of the range of 0.65 to 1.7 µm, but D50 was outside of the range of 1.5 to 3.6 µm, D90 was in the range of 2.0 to 14 µm and MV was outside of the range of 1.55 to 6.4 µm.

In other words, the particle size distribution of the magnesium oxide of Comparative Example 4 was toward relatively small particle diameters.

### (c) Slurry viscosity

With the magnesium oxide of Example 1, the slurry viscosity at 5°C was 3.69 mPa·s. The slurry viscosity at 5°C was therefore in the range of 2.2 to 5.2 mPa·s which facilitates application.

With the magnesium oxides of Comparative Example 1 and Comparative Example 2, on the other hand, the slurry viscosities at 5°C were 3.39 mPa·s and 3.70 mPa·s, respectively. The slurry viscosities at 5°C were therefore in the range of 2.2 to 5.2 mPa·s which facilitates application.

### (d) Trace element content

Typical trace element contents in the magnesium oxide of Example 1 were 795 ppm for boron (B), 205 ppm for aluminum (Al), 109 ppm for copper (Cu), 266 ppm for iron (Fe), 91 ppm for manganese (Mn) and 12 ppm for titanium (Ti).

Typical trace element contents in the magnesium oxide of Example 2 were 236 ppm for boron (B), 51 ppm for aluminum (Al), 4 ppm for copper (Cu), 2 ppm for iron (Fe), lower than 1 ppm for manganese (Mn) and lower than 1 ppm for titanium (Ti).

Typical trace element contents in the magnesium oxide of Example 3 were 244 ppm for boron (B), 261 ppm for aluminum (Al), 4 ppm for copper (Cu), 8 ppm for iron (Fe), lower than 1 ppm for manganese (Mn) and lower than 1 ppm for titanium (Ti).

Typical trace element contents in the magnesium oxide of Comparative Example 1, on the other hand, were 852 ppm for boron (B), 22 ppm for aluminum (Al), 1 ppm for copper (Cu), 135 ppm for iron (Fe), 8 ppm for manganese (Mn) and 2 ppm for titanium (Ti). Typical trace element contents in the magnesium oxide of Comparative Example 2 were 200 ppm for boron (B), lower than 1 ppm for aluminum (Al), 2 ppm for copper (Cu), 0 ppm for iron (Fe), lower than 1 ppm for manganese (Mn) and lower than 1 ppm for titanium (Ti).

Typical trace element contents in the magnesium oxide of Comparative Example 3 were 144 ppm for boron (B), 22 ppm for aluminum (Al), 4 ppm for copper (Cu), lower than 1 ppm for iron (Fe), lower than 1 ppm for manganese (Mn) and lower than 1 ppm for titanium (Ti).

Typical trace element contents in the magnesium oxide of Comparative Example 4 were 240 ppm for boron (B), 331 ppm for aluminum (Al), 4 ppm for copper (Cu), 11 ppm for iron (Fe), lower than 1 ppm for manganese (Mn) and lower than 1 ppm for titanium (Ti).

The results for (b) to (d) are shown in Table 1.

**[Table 1]**

| | | Example 1 | Example 2 | Example 3 | Comp. Example 1 | Comp. Example 2 | Comp. Example 3 | Comp. Example 4 |
|---|---|---|---|---|---|---|---|---|
| Number of plate-shaped particles: number of reticular particles | | 10:90 | 5:95 | 15:85 | 0:100 | 0:100 | 100:0 | 30:70 |
| Particle size distribution (µm) | D10 | 1.24 | 0.77 | 0.72 | 1.29 | 1.02 | 1.14 | 0.52 |
| | D50 | 2.55 | 1.53 | 1.54 | 6.15 | 3.86 | 4.00 | 1.43 |
| | D90 | 9.97 | 2.54 | 2.58 | 40.01 | 70.52 | 6.75 | 2.57 |
| | MV | 4.57 | 1.62 | 1.62 | 17.17 | 25.53 | 4.12 | 1.50 |
| Slurry viscosity (mPa·s) | 5°C | 3.69 | - | - | 3.39 | 3.70 | - | - |
| | B | 795 | 236 | 244 | 852 | 200 | 144 | 240 |
| | Al | 205 | 51 | 261 | 22 | 1> | 22 | 331 |
| Trace elements (ppm) | Cu | 109 | 4 | 4 | 1 | 2 | 4 | 4 |
| | Fe | 266 | 2 | 8 | 135 | 0 | 1> | 11 |
| | Mn | 91 | 1> | 1> | 8 | 1> | 1> | 1> |
| | Ti | 12 | 1> | 1> | 2 | 1> | 1> | 1> |

### (e) Pore distribution, pore volume and BET specific surface area

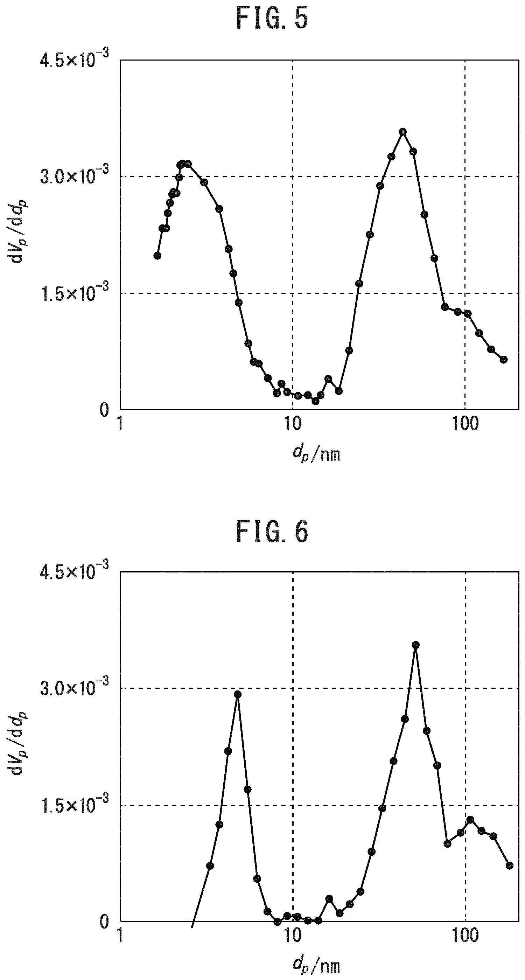

Fig. 5 is a graph showing an example of the pore distribution of the magnesium oxide of Example 1. The ordinate represents differential pore volume (cm³·g⁻¹·nm⁻¹), and the abscissa represents pore diameter (nm). With the magnesium oxide of Example 1, the total pore volume was 0.276 cm³/g and the BET specific surface area was 16.84 m²/g. The total pore volume and BET specific surface area were therefore relatively large. The pore volume peaks were near a pore diameter of 2 to 6 nm and near a pore diameter of 20 to 70 nm.

Fig. 6 is a graph showing an example of the pore distribution of the magnesium oxide of Example 2. The ordinate represents differential pore volume (cm³.g⁻¹·nm⁻¹), and the abscissa represents pore diameter (nm). With the magnesium oxide of Example 2, the total pore volume was 0.290 cm³/g and the BET specific surface area was 20.28 m²/g. The total pore volume and BET specific surface area were therefore relatively large. The pore volume peaks were near a pore diameter of 2 to 6 nm and near a pore diameter of 30 to 70 nm.

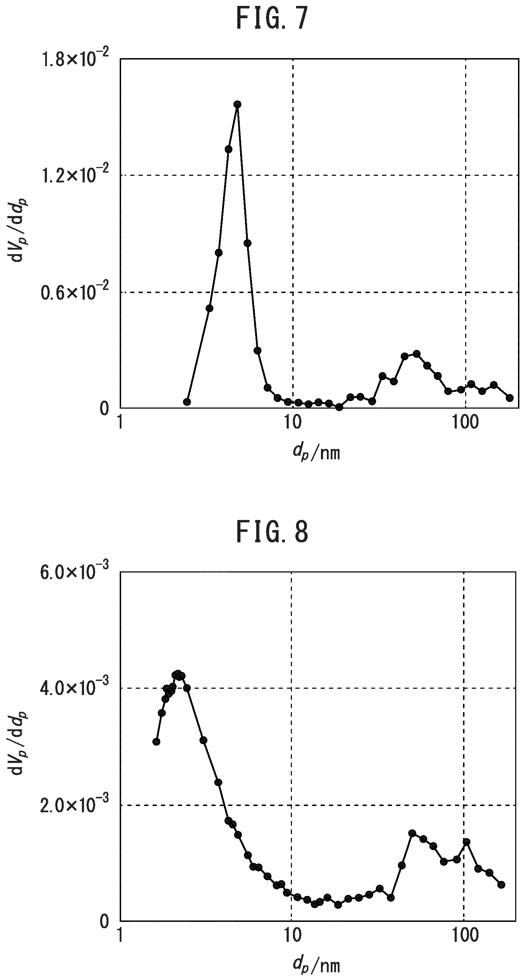

Fig. 7 is a graph showing an example of the pore distribution of the magnesium oxide of Example 3. The ordinate represents differential pore volume (cm³·g⁻¹·nm⁻¹), and the abscissa represents pore diameter (nm). With the magnesium oxide of Example 3, the total pore volume was 0.259 cm³/g and the BET specific surface area was 32.83 m²/g. The total pore volume and BET specific surface area were therefore relatively small. The pore volume peak was near a pore diameter of 3 to 6 nm. A pore volume peak was also present near a pore diameter of 30 to 70 nm, but it was small.

Fig. 8 is a graph showing an example of the pore distribution of the magnesium oxide of Comparative Example 1. The ordinate represents differential pore volume (cm³·g⁻¹·nm⁻¹), and the abscissa represents pore diameter (nm). With the magnesium oxide of Comparative Example 1, the total pore volume was 0.201 cm³/g and the BET specific surface area was 15.34 m²/g. The total pore volume and BET specific surface area were therefore relatively small. The pore volume peak was near a pore diameter of 2 to 6 nm. However, no pore volume peak was present near a pore diameter of 20 to 70 nm. A pore volume peak was also present near a pore diameter of 50 to 80 nm, but it was small.

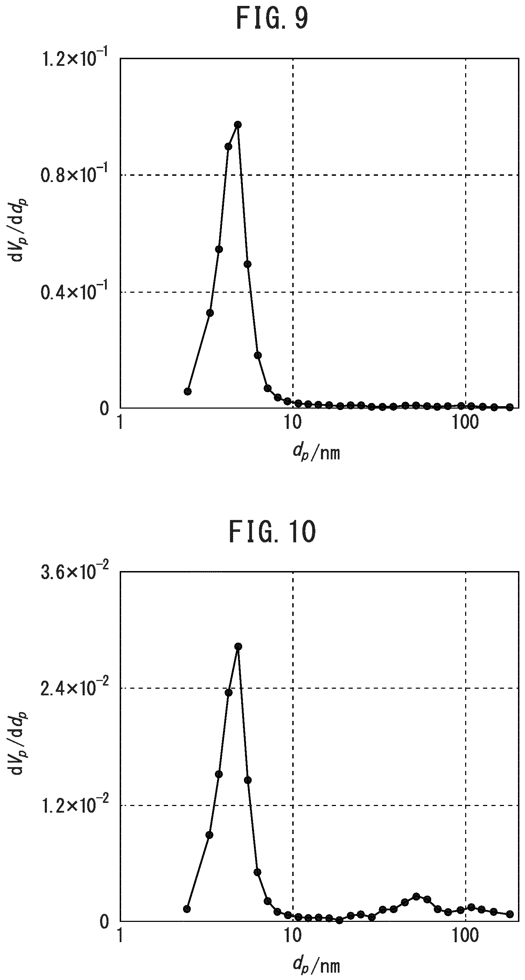

Fig. 9 is a graph showing an example of the pore distribution of the magnesium oxide of Comparative Example 3. The ordinate represents differential pore volume (cm³·g⁻¹·nm⁻¹), and the abscissa represents pore diameter (nm). With the magnesium oxide of Comparative Example 3, the total pore volume was 0.281 cm³/g and the BET specific surface area was 121.67 m²/g. The total pore volume and BET specific surface area were therefore relatively small. The pore volume peak was near a pore diameter of 3 to 6 nm.

Fig. 10 is a graph showing an example of the pore distribution of the magnesium oxide of Comparative Example 4. The ordinate represents differential pore volume (cm³·g⁻¹·nm⁻¹), and the abscissa represents pore diameter (nm). With the magnesium oxide of Comparative Example 4, the total pore volume was 0.282 cm³/g and the BET specific surface area was 46.43 m²/g. The total pore volume and BET specific surface area were therefore relatively small. The pore volume peak was near a pore diameter of 3 to 6 nm.

### (f) Optical observation image and 3D observation image based on application test

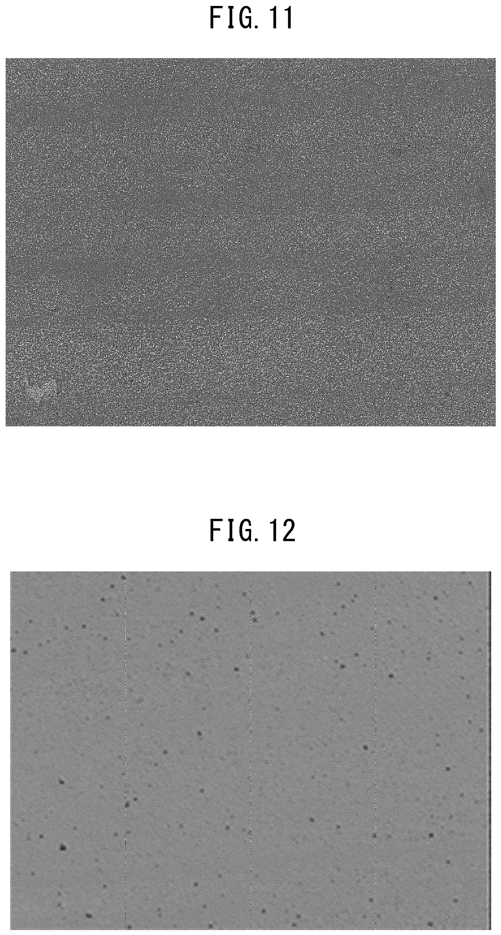

Fig. 11 is an optical observation image showing an example of application test results for the magnesium oxide of Example 1. The magnification factor was 40x. Fig. 12 is a 3D observation image showing an example of application test results for the magnesium oxide of Example 1. The magnification factor was 120x. As shown in the image, very few uneven sections or clumps were found in the coated film formed from the slurry containing the magnesium oxide of Example 1.

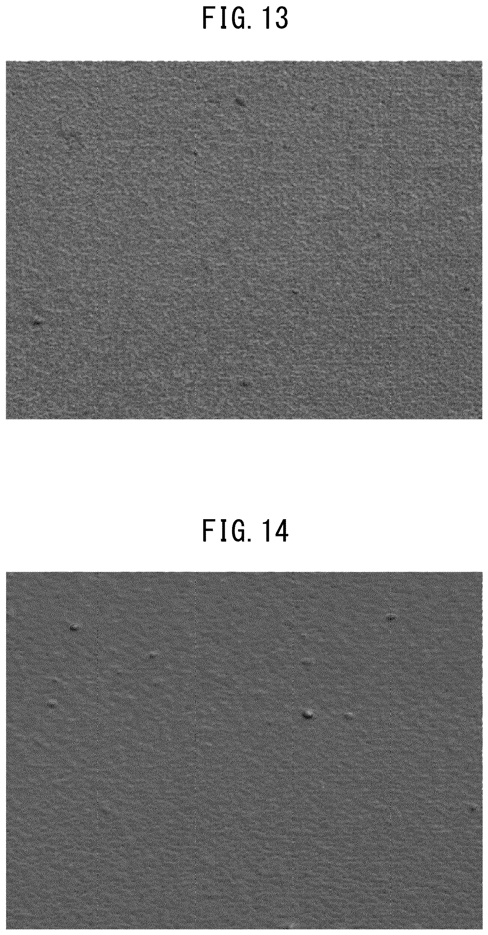

Fig. 13 is a 3D observation image showing an example of application test results for the magnesium oxide of Example 2. The magnification factor was 120x. As shown in the image, very few uneven sections or clumps were found in the coated film formed from the slurry containing the magnesium oxide of Example 2.

Fig. 14 is a 3D observation image showing an example of application test results for the magnesium oxide of Example 3. The magnification factor was 120x. As shown in the image, very few uneven sections or clumps were found in the coated film formed from the slurry containing the magnesium oxide of Example 3.

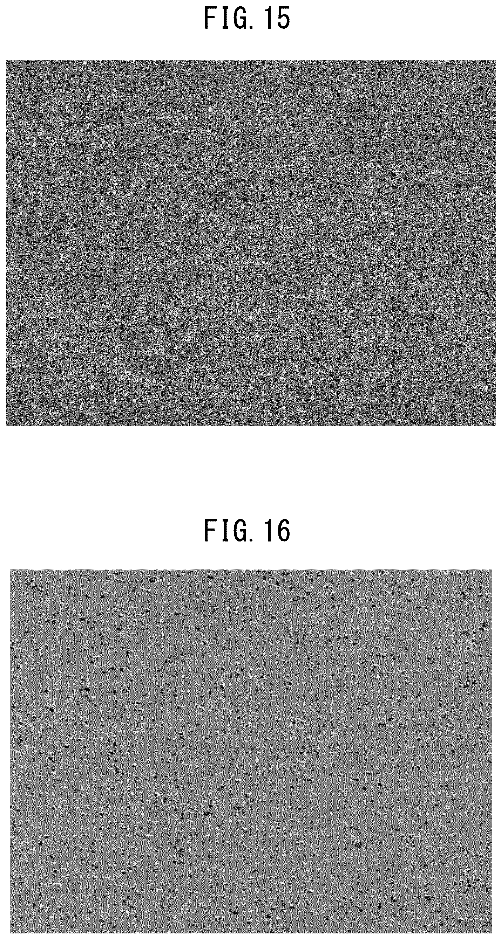

Fig. 15 is an optical observation image showing an example of application test results for the magnesium oxide of Comparative Example 1. The magnification factor was 40x. Fig. 16 is a 3D observation image showing an example of application test results for the magnesium oxide of Comparative Example 1. The magnification factor was 120x. As shown in the image, numerous uneven sections and clumps were found in the coated film formed from the slurry containing the magnesium oxide of Comparative Example 1.

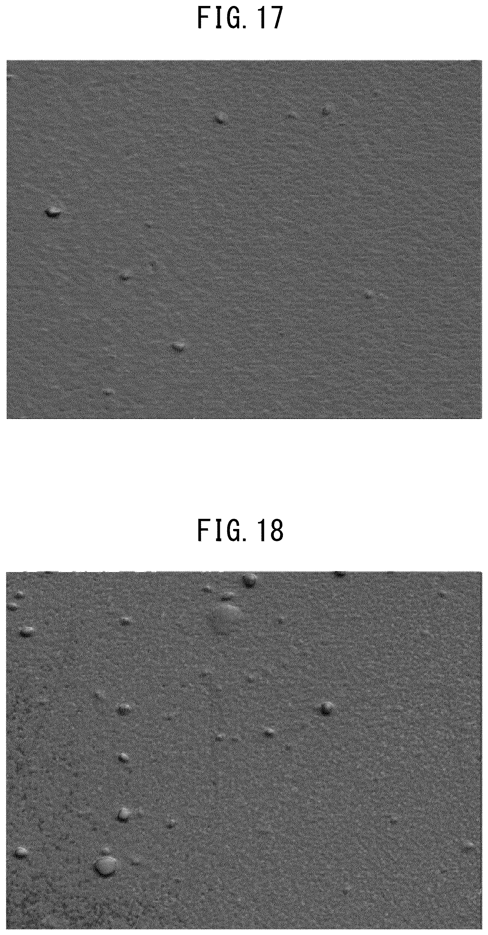

Fig. 17 is a 3D observation image showing an example of application test results for the magnesium oxide of Comparative Example 3. The magnification factor was 120x. As shown in the image, numerous uneven sections and clumps were found in the coated film formed from the slurry containing the magnesium oxide of Comparative Example 3.

Fig. 18 is a 3D observation image showing an example of application test results for the magnesium oxide of Comparative Example 4. The magnification factor was 120x. As shown in the image, numerous uneven sections and clumps were found in the coated film formed from the slurry containing the magnesium oxide of Comparative Example 4.

As seen from the data provided above, the magnesium oxide for an annealing separator according to the invention, having the construction described above, allows uniform application of the magnesium oxide for an annealing separator onto a steel sheet. It is thus possible to use the magnesium oxide for an annealing separator to obtain a forsterite coating film with satisfactory film properties. It is therefore possible to improve the magnetic properties of a grain-oriented electromagnetic steel sheet produced using the magnesium oxide for an annealing separator.

### REFERENCE SIGNS LIST

1 Reticular particle
2 Plate-shaped particle
3 Lumpy particle
11 Surface
12 Depression
21 Surface

## Claims

1. Magnesium oxide for an annealing separator, the magnesium oxide comprising:
reticular particles each having multiple depressions on a surface, and
plate-shaped particles,
wherein a proportion of the number of plate-shaped particles and the number of reticular particles is 1:99 to 20:80.

2. The magnesium oxide for an annealing separator according to claim 1, wherein in the reticular particles,
a particle diameter of each of the reticular particles is 0.05 to 5 µm, and
a size of each of the multiple depressions is 0.005 to 0.2 µm.

3. The magnesium oxide for an annealing separator according to claim 1, wherein a particle diameter of each of the plate-shaped particles is 0.05 to 5 µm.

4. The magnesium oxide for an annealing separator according to claim 1, wherein the magnesium oxide contains copper, and
a content of the copper is 3 to 200 ppm.

5. The magnesium oxide for an annealing separator according to claim 1, wherein in a particle size distribution of the magnesium oxide,
D10 is 0.65 to 1.7 µm,
D50 is 1.5 to 3.6 µm,
D90 is 2.0 to 14 µm, and
a volume-average diameter is 1.55 to 6.4 µm.

6. The magnesium oxide for an annealing separator according to claim 1, the magnesium oxide further comprising:
lumpy particles that are larger than the plate-shaped particles and reticular particles.

7. The magnesium oxide for an annealing separator according to claim 1, wherein
when a slurry has been formed containing the magnesium oxide at 5 to 30 mass% using water as a solvent, a viscosity of the slurry at 5°C is 2.2 to 5.2 mPa·s.

8. A method of producing a grain-oriented electromagnetic steel sheet, the method comprising:
an applying step of applying a slurry comprising the magnesium oxide for an annealing separator according to claim 1 onto a decarburized annealed steel sheet, and
a high temperature annealing step of annealing the slurry-applied steel sheet.
